# EUROPÄISCHE PATENTANMELDUNG

(11) **EP 1 738 962 A1**
(43) Veröffentlichungstag der Anmeldung: **03.01.2007**
(21) Anmeldenummer: 06010009.6
(22) Anmeldetag: 16.05.2006
(51) Int. Cl.: B60R 11/02, B60R 25/00

(54) **Verfahren zur elektronischen Sicherung eines entnehmbaren Zubebhörteils**

(30) Priorität: 02.07.2005 DE 102005031035
(71) Anmelder: Bayerische Motoren Werke Aktiengesellschaft, 80809 München (DE)
(72) Erfinder: Krumbach, Peter, 86946 Vilgertshofen (DE)

(57) **Zusammenfassung**

Bei einem Verfahren zur elektronischen Sicherung eines entfernbaren Zubehörteils, insbesondere eines Datenträgers, für ein Kraftfahrzeug, ist die elektronische Sicherung temporär in Abhängigkeit von einem Berechtigungsnachweis aktivierbar und/oder deaktivierbar.

## Beschreibung

Die vorliegende Erfindung betrifft ein Verfahren zur elektronischen Sicherung eines entnehmbaren Zubehörteils, insbesondere eines Datenträgers, für ein Kraftfahrzeug.

Um beispielsweise Diebstahl zu verhindern, besteht in modernen Kraftfahrzeugen die Möglichkeit, entnehmbare Zubehörteile elektronisch gegen eine Entnahme zu sichern. Beispielsweise besitzen einige Fahrzeuge eine Codieroption, die eine Auswurfsperre einer Navigations-DVD aktiviert.

Bisher ist es lediglich bekannt, eine solche Codieroption dauerhaft zu setzen, typischerweise bereits beim Hersteller oder in einer Fachwerkstätte. Dies ist beispielsweise vorteilhaft, um die Entnahme von Navigations-DVDs aus Flottenfahrzeugen zu verhindern. Nachteilig ist, dass die so gesicherten Zubehörteile dauerhaft gesichert sind und auch durch berechtigte Personen keine einfache Deaktivierung der Sicherung möglich ist.

Aufgabe der vorliegenden Erfindung ist es, ein Verfahren zur elektronischen Sicherung eines entnehmbaren Zubehörteils zu schaffen, durch welches die Aktivierung und/oder Deaktivierung der Sicherung flexibilisiert wird.

Gelöst wird diese Aufgabe erfindungsgemäß durch ein Verfahren zur elektronischen Sicherung eines entnehmbaren Zubehörteils, insbesondere eines Datenträgers, für ein Kraftfahrzeug, bei welchem die elektronische Sicherung temporär in Abhängigkeit von einem Berechtigungsnachweis aktivierbar und/oder deaktivierbar ist.

Das erfindungsgemäße Verfahren bietet den Vorteil, dass das gesicherte Zubehörteil im Falle eines erfolgreichen Berechtigungsnachweises jederzeit entnehmbar ist. Im Falle eines nicht erfolgreichen Berechtigungsnachweises hingegen bleibt das entnehmbare Zubehörteil gesichert. Als entnehmbare Zubehörteile im Sinne der Erfindung werden insbesondere Datenträger, beispielsweise Navigations-DVDs und Audio-CD, angesehen. Die Erfindung ist jedoch gleichermaßen auf beliebige andere elektronisch sicherbare, entnehmbare Zubehörteile eines Kraftfahrzeugs anwendbar.

Gemäß einer ersten möglichen Ausführungsform der vorliegenden Erfindung wird der Berechtigungsnachweis in an sich bekannter Weise durch die Abfrage und Bereitstellung eines Passworts oder Berechtigungscodes durchgeführt. Sofern bei dem Kraftfahrzeug Mittel zur Eingabe eines solchen Passworts oder Berechtigungscodes vorhanden sind, lässt sich die Erfindung auf diesem Weg überaus kostengünstig realisieren.

Gemäß einer zweiten, hier bevorzugten, Ausführungsform der vorliegenden Erfindung dient zum Berechtigungsnachweis ein mit dem Kraftfahrzeug verbundener Kraftfahrzeugschlüssel. Der Fahrzeugnutzer kann seine Berechtigung somit alleine durch den Besitz eines bestimmten Kraftfahrzeugschlüssels nachweisen. Beispielsweise könnte die Entsicherung aufgehoben werden, wenn das Kraftfahrzeug mit einem regulären Kraftfahrzeugschlüssel geöffnet oder gestartet wird, während die Sperre bestehen bleibt, wenn das Kraftfahrzeug mit einem so genannten Geldbörsenschlüssel geöffnet oder gestartet wird. Ein solcher Geldbörsenschlüssel wird heutigen Kraftfahrzeugen üblicherweise beigegeben und erlaubt meist zwar das Öffnen und Starten des Kraftfahrzeugs, jedoch nicht das Öffnen des Handschuhfachs und des Gepäckraums.

Gemäß einer Weiterbildung der zweiten Ausführungsform der vorliegenden Erfindung wird die elektronische Sicherung im Rahmen eines Benutzungsmodus aktiviert, in welchem sich das Kraftfahrzeug oder Teile desselben bei Verwendung eines bestimmten Kraftfahrzeugschlüssels, insbesondere des Geldbörsenschlüssels, befindet. In vielen modernen Kraftfahrzeugen wird gemäß dem Stand der Technik ohnehin bereits unabhängig von der Erfindung bei Verwendung des Geldbörsenschlüssels ein so genannter Hotelmodus aktiviert. Dieser Benutzungsmodus sieht beispielsweise eine Sicherung des Handschuhfachs und des Gepäckraums vor. Erfindungsgemäß wird er um die Aktivierung der elektronischen Sicherung zumindest eines entnehmbaren Zubehörteils erweitert. Sofern das Kraftfahrzeug ohnehin einen solchen Benutzungsmodus aufweist, ist die Erfindung auf diese Weise sehr einfach umsetzbar.

Falls in solcher Benutzungsmodus des Kraftfahrzeugs, beispielsweise der Hotelmodus, nur Steuergeräte betrifft, welche nicht an der elektronischen Sicherung beteiligt sind, wird eine Nachricht an das Steuergerät bzw. diejenigen Steuergeräte gesendet, welche für die elektronische Sicherung zuständig sind. Eine solche Nachricht kann beispielsweise über einen Datenbus des Kraftfahrzeugs, z. B. CAN, versendet werden.

Die erste bevorzugte Ausführungsform der vorliegenden Erfindung ist mit der zweiten bevorzugten Ausführungsform der vorliegenden Erfindung insofern kombinierbar als ein Passwort oder Berechtigungscode für den Berechtigungsnachweis in dem Kraftfahrzeugschlüssel gespeichert sein kann. Auf diese Weise kann sehr einfach eine Deaktivierung der elektronischen Sicherung bei Verwendung eines ersten regulären Kraftfahrzeugschlüssels und eine Aktivierung der elektronischen Sicherung bei Verwendung eines zweiten regulären Kraftfahrzeugschlüssels erreicht werden. Der Berechtigungscode muss hierzu lediglich in dem ersten regulären Kraftfahrzeugschlüssel, vorzugsweise gemeinsam mit weiteren Personalisierungsdaten, abgelegt und im Rahmen eines erfindungsgemäßen Berechtigungsnachweises ausgelesen werden.

## Patentansprüche

1. Verfahren zur elektronischen Sicherung eines entnehmbaren Zubehörteils, insbesondere eines Datenträgers, für ein Kraftfahrzeug,
**dadurch gekennzeichnet,**
**dass** die elektronische Sicherung temporär in Abhängigkeit von einem Berechtigungsnachweis aktivierbar und/oder deaktivierbar ist.

2. Verfahren nach Anspruch 1, **dadurch gekennzeichnet,**
**dass** zum Berechtigungsnachweis ein mit dem Kraftfahrzeug verbundener Kraftfahrzeugschlüssel dient.

3. Verfahren nach Anspruch 1, **dadurch gekennzeichnet,**
**dass** die elektronische Sicherung im Rahmen eines Benutzungsmodus aktiviert wird, in welchem sich das Kraftfahrzeug oder Teile desselben bei Verwendung eines bestimmten Kraftfahrzeugschlüssels befindet.
